(19) Europäisches Patentamt / European Patent Office / Office européen des brevets

(11) **EP 4 488 572 A1**

(12) **DEMANDE DE BREVET EUROPEEN**

(43) Date de publication:
**08.01.2025 Bulletin 2025/02**

(21) Numéro de dépôt: **24183999.2**

(22) Date de dépôt: **24.06.2024**

(51) Classification Internationale des Brevets (IPC):
**F21V 21/08** (2006.01)   **H02G 1/02** (2006.01)
**H02G 7/00** (2006.01)   **F21W 111/00** (2006.01)
**F21Y 115/10** (2016.01)

(52) Classification Coopérative des Brevets (CPC):
**F21V 21/08; H02G 1/02; H02G 7/00;**
F21W 2111/00; F21Y 2115/10; H02J 50/10

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **03.07.2023 FR 2307052**

(71) Demandeur: **OBSTA**
**75014 Paris (FR)**

(72) Inventeurs:
• **ROYER, Alban**
**75014 Paris (FR)**
• **MELINE, Thomas**
**75014 Paris (FR)**

(74) Mandataire: **Loyer & Abello**
**9, rue Anatole de la Forge**
**75017 Paris (FR)**

(54) **DISPOSITIF DE SIGNALISATION LUMINEUSE DESTINÉ À ÊTRE FIXÉ À UNE LIGNE POUR LE TRANSPORT D'ÉNERGIE ÉLECTRIQUE**

(57) L'invention concerne un dispositif de signalisation lumineuse (1) apte et destiné à être fixé à une ligne (2) pour le transport d'énergie électrique, ledit dispositif de signalisation lumineuse (1) comprenant :
- une coque (3) présentant une forme de révolution autour d'un axe longitudinal (X), ladite coque (3) comportant une demi-coque supérieure (4) et une demi-coque inférieure (5);
- la coque (3) comportant au moins deux ouvertures (22) qui sont chacune recouvertes par un capot transparent (23);
- au moins deux diodes électroluminescentes (16) qui sont logées à l'intérieur de la coque (3) et respectivement disposées en regard de l'une et l'autre des ouvertures (22),; et
- au moins un transformateur de courant (15) qui est logé dans la coque (3) configuré pour transformer un courant circulant dans la ligne (2) en un courant adapté pour alimenter en énergie électrique les diodes électroluminescentes (16).

[Fig. 1]

EP 4 488 572 A1

## Description

### Domaine technique

L'invention se rapporte au domaine des dispositifs de signalisation lumineuse, ou balises, destinés à signaler la présence d'obstacle à la navigation aérienne.

L'invention se rapporte plus particulièrement aux dispositifs de signalisation lumineuse destinés à être fixés à une ligne pour le transport d'énergie électrique afin de signaler la ligne aux aéronefs et qui sont alimentés en électricité par la ligne.

### Arrière-plan technologique

Il est connu de l'état de la technique des balises lumineuses qui sont suspendues à une ligne électrique et comportent une lampe néon qui est reliée, d'une part, à la ligne et, d'autre part, à un élément capacitif lui-même relié à la ligne. Une telle balise lumineuse est notamment décrite dans le brevet FR2786253 au nom de la demanderesse.

Il est également connu des balises lumineuses comportant des diodes électroluminescentes ainsi que des transformateurs électriques qui permettent, par induction, d'alimenter en électricité les diodes électroluminescentes via la ligne. Une telle balise lumineuse est notamment divulguée dans la demande EP3579363.

Toutefois, les balises lumineuses précitées ne sont pas pleinement satisfaisantes. En effet, les balises lumineuses sont suspendues à la ligne, en dessous de celle-ci. Elles sont donc particulièrement encombrantes et offrent une prise au vent importante. Elles ne permettent pas non plus de limiter l'effet couronne, également désigné par « effet corona », qui est susceptible de générer des vibrations sonores nuisibles autour de la balise lumineuse.

### Résumé de l'invention

Une idée à la base de l'invention est donc de proposer un dispositif de signalisation lumineuse destiné à être fixé à une ligne pour le transport d'énergie électrique qui soit apte à être alimenté en électricité par la ligne, soit particulièrement compact, offre une faible prise au vent et permette de limiter l'effet couronne.

Selon un mode de réalisation, l'invention fournit un dispositif de signalisation lumineuse apte et destiné à être fixé à une ligne pour le transport d'énergie électrique, ledit dispositif de signalisation lumineuse comprenant :

- une coque qui s'étend selon un axe longitudinal et comporte une demi-coque supérieure et une demi-coque inférieure configurées pour être respectivement disposées de part et d'autre de la ligne et s'assembler l'une à l'autre le long d'un plan d'assemblage de sorte à entourer la ligne;
- des organes de fixation agencés pour fixer la demi-coque supérieure et la demi-coque inférieure l'une à l'autre ;
- la coque comportant au moins deux ouvertures qui sont chacune recouvertes par un capot transparent et arrangées respectivement de part et d'autre d'un plan longitudinal médian ;
- au moins deux sources lumineuses qui sont logées à l'intérieur de la coque et respectivement disposées en regard de l'une et l'autre des ouvertures ;
- au moins un transformateur de courant qui est logé dans la coque et qui comporte une bobine d'induction qui est apte et destinée à être magnétiquement couplée à la ligne; ledit transformateur de courant étant configuré pour transformer un courant circulant dans la ligne en un courant adapté pour alimenter en énergie électrique les sources lumineuses.

Grâce à ces caractéristiques, les sources lumineuses ne sont pas suspendues en dessous du câble ou situées en dehors de la coque mais directement logées dans les demi-coques qui entourent la ligne, le dispositif de signalisation lumineuse ainsi réalisé est donc beaucoup plus compact et offre une bien moindre prise au vent. En outre, compte-tenu du logement des sources lumineuses dans la coque l'effet couronne est limité.

Selon des modes de réalisation, un tel dispositif de signalisation lumineuse peut comporter une ou plusieurs des caractéristiques suivantes.

Selon un mode de réalisation, les sources lumineuses sont chacune positionnées pour émettre un flux lumineux comprenant une pluralité de rayons lumineux dont au moins un est parallèle au plan d'assemblage (P).

Selon un mode de réalisation, la coque présente une forme de révolution autour de l'axe longitudinal. Ainsi, compte-tenu de la forme de révolution de la coque, l'effet couronne est encore davantage limitée.

Selon un mode de réalisation, la forme de révolution de la coque correspond à une forme obtenue par rotation, autour de l'axe longitudinal X, d'une courbe ovale, ladite courbe ovale étant allongée selon l'axe longitudinal et symétrique par rapport audit axe longitudinal. La coque ne comporte donc pas d'élément en saillie, ce qui est particulièrement avantageux pour limiter l'effet couronne. Une telle forme limite également la prise au vent et l'accumulation d'eau.

Selon un mode de réalisation, les demi-coques inférieure et supérieure présentent, à chacune de leur extrémité, une ouverture hémicirculaire permettant le passage de la ligne au travers de la coque.

Selon un mode de réalisation, chaque capot transparent présente une zone la plus éloignée de l'axe longitudinal qui est positionnée à une distance d1 de l'axe longitudinal qui est inférieure à d2 + 20 mm, avantageusement inférieure à d2 + 10 mm et de préférence inférieure à d2 + 5 mm avec d2 : la distance entre une surface externe de la demi-coque supérieure ou inférieure et l'axe longitudinal X dans le plan orthogonal de la zone considérée du capot transparent. Chaque capot transparent ne fait donc pas ou peu saillie par rapport à la coque.

Selon un mode de réalisation, les demi-coques supérieure et inférieure présentent dans une zone de bordure ménagée autour de chaque ouverture des congés ou arrondies, permettant d'éviter la présence d'arêtes saillantes susceptibles de contribuer à l'effet couronne.

Selon un mode de réalisation, les capots transparents présentent des zones logées dans les ouvertures qui sont dépourvues d'arêtes saillantes.

Selon un mode de réalisation, la coque comporte au moins quatre ouvertures qui sont chacune recouvertes par un capot transparent, deux des quatre ouvertures étant arrangées dans la demi-coque supérieure respectivement de part et d'autre du plan longitudinal médian et les deux autres étant arrangées dans la demi-coque inférieure respectivement de part et d'autre du plan longitudinal médian, le dispositif de signalisation lumineuse comportant au moins quatre sources lumineuses qui sont logées à l'intérieur de la coque et chacune disposées en regard de l'une des ouvertures, les sources lumineuses étant chacune positionnées pour émettre un flux lumineux comprenant une pluralité de rayons lumineux dont au moins un est parallèle au plan d'assemblage. Ainsi, un tel dispositif de signalisation lumineuse est apte à émettre dans le plan horizontal même lorsque la ligne tourne légèrement autour de son axe longitudinal.

Selon un mode de réalisation, en projection dans un plan transversal, les ouvertures sont chacune incluses dans un secteur angulaire qui est délimité par le plan d'assemblage et qui présente un angle inférieur à 60°.

Selon un mode de réalisation, le dispositif de signalisation lumineuse comprend un ensemble de sources lumineuses comprenant plusieurs sources lumineuses, disposé en regard de chacune des ouvertures.

Selon un mode de réalisation, chaque ensemble de sources lumineuses est fixé sur une carte électronique logé dans la coque.

Selon un mode de réalisation, la carte électronique s'étend dans un plan formant avec le plan d'assemblage, un angle $\beta \geq 90 - \alpha$ avec $\alpha$ : le demi-angle au sommet d'un cône d'émission des sources lumineuses dudit ensemble, exprimé en degrés.

Selon un mode de réalisation, $\beta \geq 100 - \alpha$.

Selon un mode de réalisation, les sources lumineuses de chaque ensemble sont disposées sous la forme d'une rangée qui est alignée selon une direction parallèle à la direction longitudinale X.

Selon un mode de réalisation, la coque comporte deux ouvertures qui sont respectivement arrangées dans la demi-coque supérieure et dans la demi-coque inférieure et sont chacune recouvertes par un capot transparent, les deux ouvertures étant ménagées le long du plan longitudinal médian et respectivement positionnées de part et d'autre du plan d'assemblage (P).

Selon un mode de réalisation, les capots transparents sont divisés en une pluralité de lentilles qui sont régulièrement réparties autour d'un axe Z qui est orthogonal au plan d'assemblage (P) et coupe l'axe longitudinal (X), le dispositif de signalisation lumineuse comportant une source lumineuse en regard de chacune des lentilles, chacune des lentilles étant configurée pour focaliser le flux lumineux émis par la source lumineuse correspondante et le diriger au moins en partie parallèlement au plan d'assemblage (P).

Un tel mode de réalisation est avantageux en ce qu'il permet d'assurer un éclairage à 360° autour d'un axe vertical perpendiculaire à l'axe X.

Selon un mode de réalisation, les sources lumineuses sont fixées sur des plaques de support, chaque plaque de support étant fixée contre une surface interne de l'une des demi-coque inférieure et demi-coque supérieure par des moyens de fixation, chaque plaque de support plaquant l'un des capots transparents contre une zone de bordure de ladite demi-coque inférieure ou supérieure qui est ménagée autour de l'une des ouvertures. Ainsi, les plaques de support assurent une double fonctionnalité à savoir d'assurer la fixation des sources lumineuses et des capots transparents à la coque. Ceci permet en outre d'éviter ou de limiter la saillie des capots transparents par rapport à la coque, limitant ainsi l'effet couronne.

Selon un mode de réalisation, un joint d'étanchéité est pincé entre chacun des capots transparents et la zone de bordure. Ceci permet d'assurer l'étanchéité des ouvertures.

Selon un mode de réalisation, un joint souple est disposé entre chaque plaque de support et le capot transparent respectif.

Selon un mode de réalisation, les ouvertures sont de forme oblongue et s'allongent parallèlement à la direction longitudinale.

Selon un mode de réalisation, les capots transparents sont réalisés en verre, en polycarbonate ou en polyméthacrylate de méthyle (PMMA).

Selon un mode de réalisation, les capots transparents intègrent une lentille, divergente ou convergente, apte à mettre en forme le flux lumineux émis par la source lumineuse.

Selon un mode de réalisation, au moins l'une des sources lumineuses est logée dans la demi-coque supérieure et au moins une autre des sources lumineuses est logée dans la demi-coque inférieure, le dispositif de signalisation lumineuse comportant au moins deux transformateurs de courant respectivement logés dans la demi-coque supérieure et la demi-coque inférieure, chacun des transformateurs de courant comportant une bobine d'induction qui est apte et destinée à être magnétiquement couplée à la ligne et étant reliée à chaque source lumineuse logée dans la demi-coque supérieure ou inférieure dans laquelle ledit transformateur de courant est logé. Ceci permet d'avoir deux systèmes d'éclairage indépendants, ce qui augmente la fiabilité du dispositif de signalisation lumineuse.

Selon un mode de réalisation, la bobine d'induction de chacun des transformateurs de courant comporte un noyau ferromagnétique présentant une forme de demi-tube s'étendant le long de l'axe longitudinal et un enroulement de fil qui est enroulé autour du noyau ferromagnétique.

Selon un mode de réalisation, chacun des transformateurs de courant comporte un circuit de redressement double alternance, tel qu'un pont de diode.

Selon un mode de réalisation, chacun des transformateurs de courant comporte en outre une inductance couplée.

Selon un mode de réalisation, la demi-coque supérieure et la demi-coque inférieure sont identiques, ce qui limite le nombre de composants différents nécessaires à la fabrication du dispositif de signalisation lumineuse.

Selon un mode de réalisation, les organes de fixation sont des vis qui passent chacune au travers d'un orifice formé dans l'une des demi-coques supérieure et inférieure et qui sont vissées dans un alésage taraudé formé dans l'autre des demi-coques supérieure et inférieure.

Selon un mode de réalisation avantageux, les vis sont noyées, c'est-à-dire que leur tête est logée à l'intérieur de l'orifice au travers duquel elles passent. Ceci contribue également à limiter l'effet couronne.

Selon un mode de réalisation, chaque alésage taraudé s'étend selon un axe géométrique qui est symétrique à un axe géométrique de l'un des orifices, par rapport à un plan médian longitudinal ou à un plan médian transversal.

Selon un mode de réalisation, l'axe géométrique de chaque alésage taraudé n'est symétrique à un axe géométrique de l'un des orifices que par rapport au plan médian longitudinal. Ceci permet d'imposer un sens de montage des deux demi-coques l'une par rapport à l'autre, ce qui peut s'avérer nécessaire afin d'aligner les entrefers des bobines d'induction de l'une et l'autre des deux demi-coques.

Selon un mode de réalisation, chacune des demi-coques supérieure et inférieure est remplie avec une garniture, par exemple en silicone. La garniture permet d'assurer l'étanchéité des composants électroniques et des bobines d'induction une fois les deux demi-coques assemblées l'une à l'autre.

Selon un mode de réalisation, le dispositif de signalisation lumineuse comporte un dispositif de mise au potentiel.

Selon un mode de réalisation, le dispositif de mise au potentiel comprend deux serre-câbles, métalliques qui sont respectivement disposés à l'une et l'autre des deux extrémités du dispositif de signalisation lumineuse et sont chacun en contact électrique avec au moins l'une des demi-coques supérieure et inférieure.

Selon un mode de réalisation, les sources lumineuses sont des diodes électroluminescentes. Les diodes électroluminescentes peuvent notamment être des diodes laser ou des diodes électroluminescentes classiques, c'est-à-dire non laser.

Selon un mode de réalisation, chaque demi-coque présente au moins deux pions de centrage qui sont adaptés pour s'emboîter dans deux orifices de centrage complémentaires de l'autre demi-coque.

Selon un mode de réalisation, le dispositif de signalisation lumineuse comprend deux serre-câbles, positionnés de part et d'autre d'une portion de la ligne ; lesdits serre-câbles étant en contact électrique avec les demi-coque supérieure et demi-coque inférieure de sorte à dévier une partie du courant passant dans la ligne au travers du dispositif de signalisation lumineuse ; le dispositif de signalisation lumineuse étant dimensionné de sorte que $\dfrac{R1}{R1+R2}$ soit supérieur à 0,5, et de préférence entre 0,7 et 0.95, avec :

- R1 : la résistance de la portion de la ligne équipée du dispositif de signalisation lumineuse 1 ; et
- R2 : la résistance équivalente du dispositif de signalisation lumineuse.

Ceci permet de protéger le circuit électrique du dispositif de signalisation lumineuse en cas de fort courant.

**Brève description des figures**

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

La figure 1 est une vue éclatée d'un dispositif de de signalisation lumineuse selon un mode de réalisation et d'une ligne à laquelle ledit dispositif est destiné à être fixé.

La figure 2 est une vue latérale du dispositif de signalisation lumineuse lorsque la demi-coque supérieure et la demi-coque inférieur sont fixées l'une à l'autre.

La figure 3 est une vue représentant l'intérieur d'une des demi-coques du dispositif de signalisation lumineuse.

La figure 4 est une vue en coupe selon un plan transversal, orthogonal à l'axe longitudinal X, de l'une des demi-coques du dispositif de signalisation lumineuse.

La figure 5 est une vue en perspective du dispositif de signalisation lumineuse dans laquelle les deux demi-coques ainsi que la garniture en silicone ne sont pas représentées afin de permettre la visualisation des composants logés dans la coque.

La figure 6 représente la face avant d'une carte électronique équipée d'un ensemble de diodes électroluminescentes.

La figure 7 représente la face arrière de la carte électronique de la figure 6.

La figure 8 est un schéma électrique de principe du dispositif de signalisation lumineuse selon une première variante de réalisation.

La figure 9 est un schéma électrique de principe du dispositif de signalisation lumineuse selon une autre variante de réalisation.

La figure 10 est une vue en perspective d'une demi-coque selon un autre mode de réalisation.

La figure 11 est un schéma représentant les intensités, résistances et tensions dans un système constitué d'une ligne et d'un dispositif de signalisation lumineuse.

**Description des modes de réalisation**

Par convention, l'axe longitudinal X du dispositif de signalisation lumineuse 1 correspond au sens de sa longueur, c'est-à-dire de sa plus grande dimension. Cet axe longitudinal X est, en outre, coaxial à l'axe de la ligne 2 lorsque ledit dispositif de signalisation lumineuse 1 est monté sur la ligne 2.

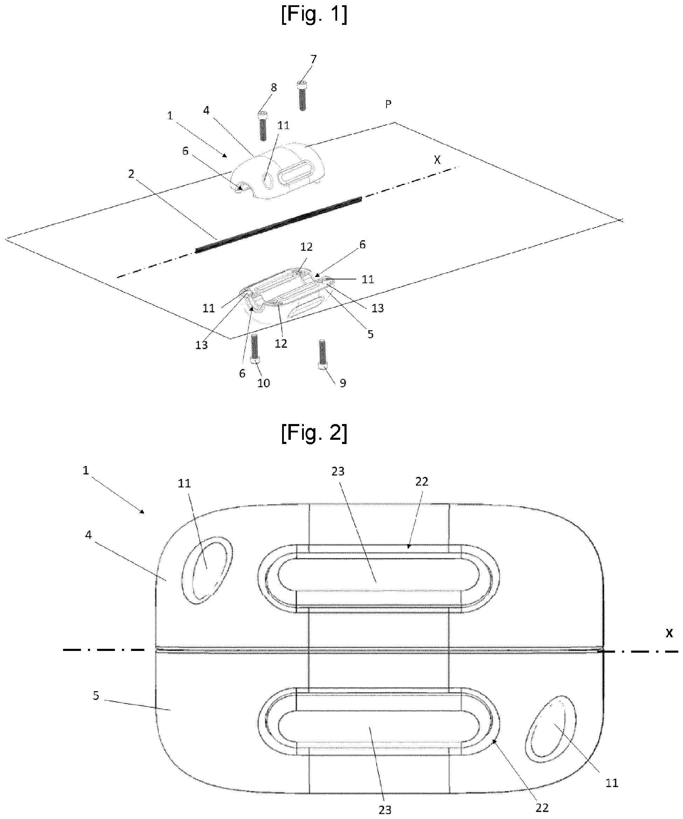

En relation avec les figures 1 à 7, on décrit ci-dessous un dispositif de signalisation lumineuse 1, selon un premier mode de réalisation. Le dispositif de signalisation lumineuse 1 est destiné à être fixé à une ligne 2 pour le transport d'énergie électrique, telle qu'une ligne haute tension, c'est-à-dire présentant une tension supérieure à 50 kV en courant alternatif.

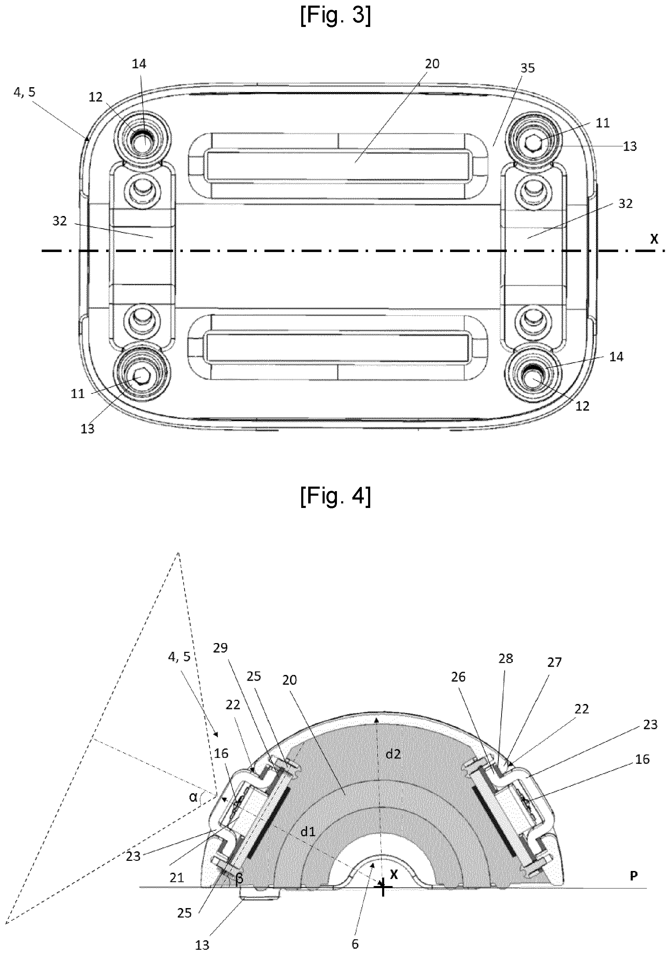

Le dispositif de signalisation lumineuse 1 comporte une coque 3. Cette coque 3 est constituée de deux demi-coques 4, 5, à savoir une demi-coque supérieure 4 et une demi-coque inférieure 5. La demi-coque supérieure 4 et la demi-coque inférieure 5 sont configurées pour être respectivement disposées de part et d'autre de la ligne 2 et pour s'assembler l'une à l'autre le long d'un plan d'assemblage P horizontal, illustré sur les figures 1 et 4. Ainsi, lorsque la demi-coque supérieure 4 et la demi-coque inférieure 5 sont assemblées l'une à l'autre, elles entourent la ligne 2. Les deux demi-coques 4, 5 présentent, à chacune de leur extrémité, une ouverture hémicirculaire 6 permettant le passage de la ligne 2 au travers de la coque 3.

Le dispositif de signalisation lumineuse 1 comporte également des organes de fixation 7, 8, 9, 10, visibles sur la figure 1, qui sont agencés pour fixer la demi-coque supérieure 4 et la demi-coque inférieure 5 l'une à l'autre. Dans le mode de réalisation représenté, les organes de fixation 7, 8, 9, 10 sont des vis qui passent chacune au travers d'un orifice 11 formé dans l'une des deux demi-coques 4, 5 et qui sont vissées dans un alésage taraudé 12 formé dans l'autre des demi-coques 4, 5. Comme illustré par exemple sur la figure 2, les vis sont noyées, c'est-à-dire que leur tête est logée à l'intérieur de l'orifice 11 au travers duquel elles passent. Les organes de fixation 7, 8, 9, 10 ne font donc pas saillie à l'extérieur de la coque 3.

Selon un mode de réalisation avantageux, les deux demi-coques 4, 5 sont identiques. Ceci permet de limiter le nombre de composants différents nécessaires à la fabrication du dispositif de signalisation lumineuse 1. Pour ce faire, l'axe géométrique de chaque alésage taraudé 12 est symétrique à l'axe géométrique de l'un des orifices 11, par rapport à un plan médian longitudinal, c'est-à-dire un plan qui est situé au milieu de la demi-coque 4, 5 et inclut l'axe longitudinal X, ou à un plan médian transversal, c'est-à-dire un plan qui est situé au milieu de la demi-coque 4, 5 et est orthogonal à l'axe longitudinal X.

Dans le mode de réalisation représenté, l'axe géométrique de chaque alésage taraudé 12 est, d'une part, symétrique à l'axe géométrique de l'un des orifices 11 par rapport au plan médian longitudinal et, d'autre part, symétrique à l'axe géométrique d'un autre des orifices 11 par rapport à un plan médian transversal. Cette double symétrie facilite le montage puisque les deux demi-coques 4, 5 n'ont ainsi pas à respecter un sens de montage pour pouvoir être assemblées l'une à l'autre. Toutefois, selon un autre mode de réalisation, il n'existe qu'une seule symétrie par rapport plan médian longitudinal. Cet avantage permet au contraire d'imposer un sens de montage des deux demi-coques l'une par rapport à l'autre, ce qui peut s'avérer nécessaire afin d'aligner les entrefers des bobines d'induction 17 qui seront décrites par la suite.

En outre, de manière avantageuse, afin de faciliter également l'assemblage, chaque demi-coque 4, 5 présente au moins deux pions de centrage 13 qui sont adaptés pour s'emboîter dans deux orifices de centrage complémentaires 14 de l'autre demi-coque 4, 5. Pour les raisons précitées, l'axe géométrique de chaque pion de centrage 13 est symétrique à un des orifices de centrage 14 par rapport au plan médian longitudinal. L'axe géométrique de chaque pion de centrage 13 peut également être symétrique à un autre des orifices de centrage 14 par rapport au plan médian transversal. Selon une autre réalisation, l'axe géométrique de chaque pion de centrage 13 n'est pas symétrique à un autre des orifices de centrage 14 par rapport au plan médian transversal. Dès lors, les pions de centrage 13 permettent d'assurer une fonction de détrompeur, c'est-à-dire assurent que les deux demi-coques 4, 5 soient fixées l'une à l'autre selon un sens déterminé.

Dans le mode de réalisation représenté, les pions de centrage 13 sont chacun coaxiaux à l'un des orifices 11 et sont percés afin de permettre le passage d'un organe de fixation 7, 8, 9, 10 tandis que les orifices de centrage 14 sont coaxiaux aux alésages taraudés 12 et débouchent dans ceux-ci.

Par ailleurs, la coque 3 présente une forme de révolution autour de l'axe longitudinal X. Plus particulièrement, la coque 3 présente une forme de révolution obtenue par rotation autour de l'axe longitudinal X d'une courbe ovale qui est, d'une part, allongée selon l'axe longitudinal et, d'autre part, symétrique par rapport audit axe longitudinal X. La coque 3 ne comporte donc pas d'arêtes saillantes. En outre, le dispositif de signalisation lumineuse 1 ne comporte pas non plus d'élément en saillie par rapport à la forme de révolution de la coque 3.

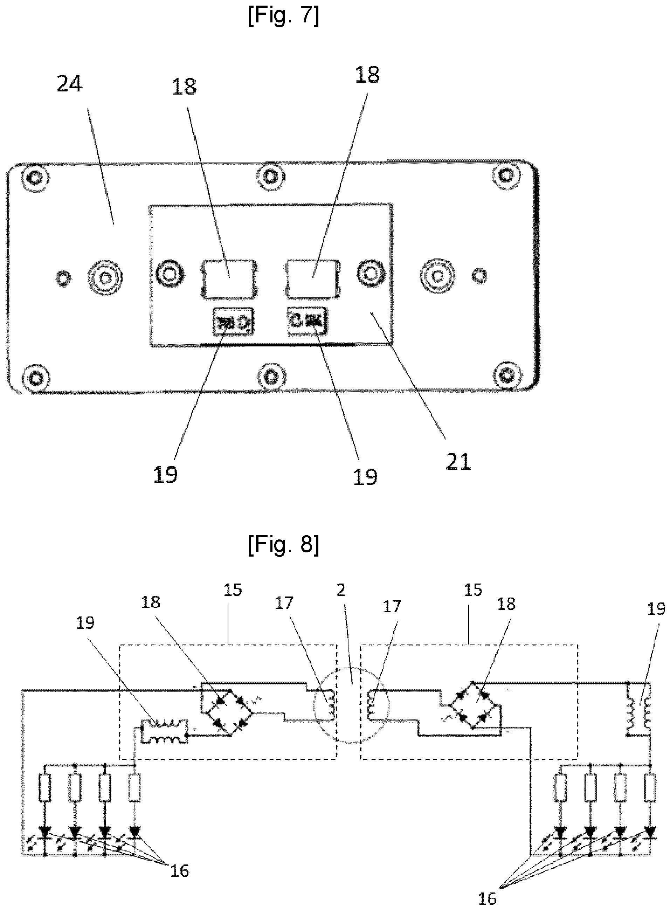

Un circuit électrique selon un mode de réalisation est représenté sur la figure 7. Le dispositif de signalisation lumineuse 1 comporte au moins un transformateur de courant 15 qui est basée sur le principe de transfert d'énergie électrique par induction. Le transformateur de courant 15 est logé dans la coque 3 et est configuré pour transformer un courant circulant dans la ligne 2 en un courant adapté pour alimenter en énergie électrique des sources lumineuses, à savoir des diodes électroluminescentes 16 dans le mode de réalisation représenté. De préférence, le dispositif de signalisation lumineuse 1 comporte deux transformateurs de courant 15 qui sont respectivement logés dans l'une et l'autre des deux demi-coques 4, 5 et qui sont chacun reliés aux diodes électroluminescentes 16 de la demi-coque 4, 5 à laquelle ils appartiennent. Ainsi, le dispositif de signalisation lumineuse 1 comporte deux systèmes d'éclairage indépendants qui sont chacun logés dans l'une des demi-coques 4, 5. Ceci permet au dispositif de signalisation lumineuse 1 de continuer à assurer la fonction de signalisation lorsque seul un des deux systèmes présente un dysfonctionnement.

Chaque transformateur de courant 15 comporte une bobine d'induction 17. La bobine d'induction 17 forme le secondaire du transformateur de courant 15 tandis que la ligne 2 en forme le primaire. Par ailleurs, chaque transformateur de courant 15 comporte au moins un circuit de conversion. Dans le mode de réalisation représenté, le circuit de conversion comporte au moins un circuit de redressement simple ou double alternance 18, tel qu'un pont de diode, qui redresse le courant alternatif en un courant continu. De manière avantageuse, le circuit de conversion comporte également au moins une inductance couplée 19 qui permet de lisser et filtrer le courant à la sortie du circuit de redressement double alternance 18 et permet ainsi de protéger les diodes électroluminescentes 16 contre les surtensions périodiques. Tout autre type de circuit de conversion peut également être utilisé.

Un circuit électrique selon une autre variante de réalisation est représenté sur la figure 8. Ce circuit électrique correspond à celui du dispositif de signalisation lumineuse représenté sur les figures 1 à 7. Dans ce mode de réalisation, chaque transformateur de courant 15 comporte une pluralité de circuits de conversion qui comportent chacun un circuit de redressement double alternance 18 et une inductance couplée 19. Ceci assure une redondance des circuits de conversion de manière à assurer encore davantage de fiabilité.

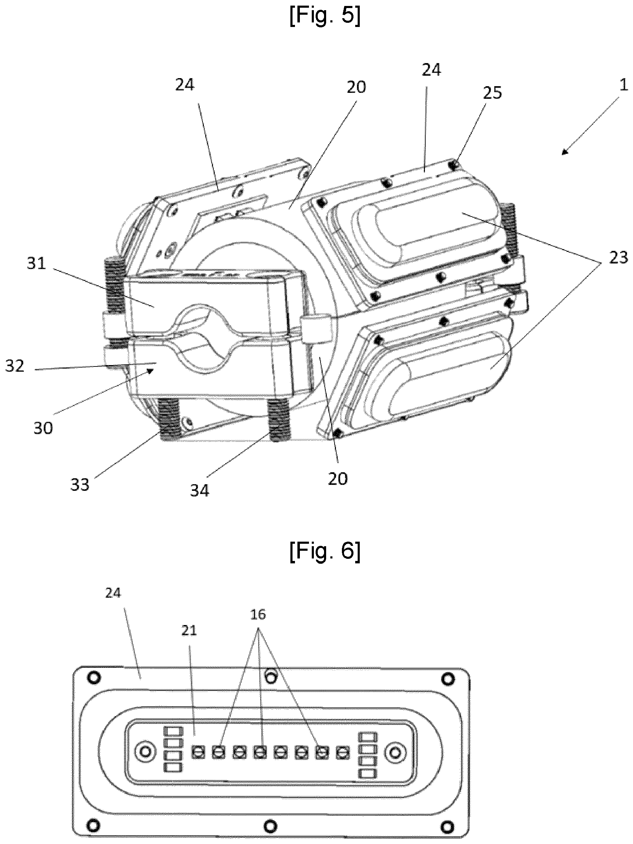

En revenant au mode de réalisation illustré sur les figures 1 à 7, on observe que, dans ce mode de réalisation, chaque bobine d'induction 17 comporte un noyau ferromagnétique 20, visible notamment sur les figures 4 et 5 ainsi qu'un enroulement de fil de cuivre, non visible, qui est enroulé autour du noyau ferromagnétique 20. Le courant alternatif dans le primaire, c'est-à-dire dans la ligne 2, produit un champ magnétique alternatif dans le noyau ferromagnétique 20 qui induit alors un courant alternatif dans le secondaire, c'est-à-dire dans l'enroulement de fil de cuivre de la bobine d'induction 17. Le noyau ferromagnétique 20 comporte une forme de demi-tube s'étendant le long de l'axe longitudinal X. La section des demi-tube est hémicirculaire ou présente une forme de U. L'enroulement de fil de cuivre présente un nombre approprié de spires pour obtenir une intensité dans le secondaire compatible avec l'alimentation des diodes électroluminescentes 16.

Les diodes électroluminescentes 16 sont réparties en plusieurs ensembles, chaque ensemble de diodes électroluminescentes étant fixé sur une carte électronique 21 dont l'une est notamment visible sur la figure 7. Les diodes électroluminescentes 16 de chaque ensemble sont, par exemple, disposées sous la forme d'une rangée qui est alignée selon une direction parallèle à la direction longitudinale X. Dans le mode de réalisation représenté, les diodes électroluminescentes 16 sont réparties en quatre ensembles. Le dispositif de signalisation lumineuse 1 comporte donc quatre plaques de support, dont deux sont logés dans la demi-coque supérieure 4 et les deux autres dans la demi-coque inférieure 5. Chaque carte électronique 21 est avantageusement une plaque de circuit imprimé rigide sur laquelle sont soudées les diodes électroluminescentes 16 de l'un des ensembles.

On observe, sur la figure 7, que deux circuits de conversion comprenant chacun un circuit de redressement double alternance 18 et une inductance couplée 19 sont fixés sur la face arrière de chaque carte électronique 21. Ainsi, chaque circuit de conversion assure le fonctionnement d'une partie seulement des diodes électroluminescentes 16 de chaque ensemble. Chaque transformateur de courant 15 comporte donc quatre circuits de conversion, c'est-à-dire deux pour chaque carte électronique 21.

Par ailleurs, comme représenté par exemple sur la figure 2 et 4, chaque demi-coque 4, 5 comporte deux ouvertures 22 qui sont chacune ménagées en regard de l'un des ensembles de diodes électroluminescentes 16. Les deux ouvertures 22 sont respectivement ménagés de part et d'autre du plan longitudinal médian. Les ouvertures 22 sont ici de forme oblongue et s'allongent parallèlement à la direction longitudinale X. Chacune des ouvertures 22 est recouverte par un capot transparent 23. Les capots transparents 23 sont, par exemple, réalisés en verre, en polycarbonate ou en polyméthacrylate de méthyle (PMMA). Selon un mode de réalisation, les capots transparents 23 peuvent intégrés une lentille.

De manière avantageuse, les ouvertures 22 sont positionnées à proximité du plan d'assemblage P de sorte à favoriser l'émission lumineuse autour du plan horizontal. Ainsi, en projection dans un plan transversal, c'est-à-dire orthogonal à la direction longitudinale X, les ouvertures 22 sont chacune incluses dans un secteur angulaire qui est délimité par le plan d'assemblage et qui présente un angle inférieur à 60°. Par ailleurs, les diodes électroluminescentes 16 de chaque ensemble sont orientées pour émettre chacune un flux lumineux selon un cône d'émission comprenant une pluralité de rayons lumineux dont au moins un est parallèle au plan d'assemblage, comme représenté schématiquement sur la figure 4. Pour ce faire, l'angle $\beta$ formé par le plan des cartes électroniques 21 avec le plan d'assemblage P est supérieur ou égal à 90 - $\alpha$ avec $\alpha$ : le demi-angle $\alpha$ au sommet du cône d'émission des diodes électroluminescentes 16 exprimé en degrés. De manière avantageuse, l'angle $\beta$ est supérieur ou égal 100 - $\alpha$. Ceci permet d'assurer une redondance et une intensité lumineuse plus importante à proximité du plan horizontal. A titre d'exemple, les demiangles au sommet des cônes d'émission sont compris entre 40 et 80°, par exemple de l'ordre de 60°

Comme représenté sur les figures 4 et 7, chacune des cartes électronique 21 est fixée à une plaque de support 24. Les plaques de support 24 sont en outre fixée contre la surface interne des demi-coques 4, 5 par des moyens de fixation 25, tels que des vis, qui passent au travers d'orifices ménagés sur le pourtour des plaques de support 24 et qui sont reçus dans des alésages filetés ménagés dans les demi-coques 4, 5.

Comme illustré sur la figure 4, les plaques de support 24 permettent également d'assurer la fixation des capots transparents 23. En effet, chaque plaque de support 24 maintient le bord périphérique 26 des capots transparents 23 contre une zone de bordure 27 des demi-coques 4, 5 qui est ménagée autour des ouvertures 22. Un joint d'étanchéité 28 est pincé entre le bord périphérique de chacun des capots transparents 23 et la zone de bordure 27. Ce joint d'étanchéité 28 permet d'éviter que de l'eau ne pénètre dans la coque 3 par les ouvertures 22. De manière avantageuse, un joint souple 29 est également disposé entre chaque plaque de support 24 et le capot transparent 23 respectif. Ceci permet de mieux répartir les efforts s'exerçant sur les capots transparents 23 et évite ainsi que ceux-ci ne se cassent.

On observe sur la figure 4 que les diodes électroluminescentes 16 ainsi que les cartes électroniques 21 auxquelles elles sont fixées, sont logées à l'intérieur des demi-coques 4, 5 et ne font donc pas saillie par rapport à celles-ci. En outre, la fixation des capots transparents 23, par l'intérieur des demi-coques 4, 5 permet d'éviter ou de limiter la saillie desdits capots transparents 23 à l'extérieur à la coque 3.

On observe ainsi, dans le mode de réalisation représenté que les capots transparents 3 sont sensiblement inclus dans l'enveloppe périphérique définie par la coque 3. Ainsi, de manière avantageuse, la zone des capots transparents 23 la plus éloignée de l'axe longitudinal X est positionnée à une distance d1 de l'axe longitudinal qui est inférieure à d2 + 20 mm, avantageusement inférieure à d2 + 10 mm et de préférence inférieure à d2 + 5 mm avec d2 : la distance entre la surface externe de la demi-coque 4, 5 et l'axe longitudinal X dans le plan orthogonal de la zone considérée du capot transparent 23.

Par ailleurs, on observe également que chaque zone de bordure 27 présente tout autour de l'ouverture des congés ou arrondies, permettant d'éviter la présence d'arêtes saillantes susceptibles de contribuer à l'effet couronne. Pour les mêmes raisons, les surfaces des zones des capots transparents 23 qui sont logées dans les ouvertures 22 sont également dépourvues d'arêtes saillantes.

Chacune des demi-coques 4, 5 est remplie avec une garniture 35 qui permet notamment d'assurer un maintien en position de la bobine d'induction 17. La garniture 35 peut être directement moulé in situ dans chacune des demi-coques 4, 5 ou alternativement être préalablement surmoulée sur la bobine d'induction 17 puis être ensuite positionnée dans la demi-coque 4, 5. De manière avantageuse, cette garniture 35 est en silicone. Le silicone présente en effet une excellente résistance à la chaleur. Selon un mode de réalisation non représenté, la garniture 35 de chacune des demi-coques 4, 5 présentent des formes qui sont configurées pour s'emboîter dans des formes complémentaires ménagées dans la garniture 35 de l'autre demi-coque 4, 5. Chacune des formes de la garniture 35 présente une position qui est symétrique par rapport au plan médian longitudinal à la position d'une forme complémentaire. Ainsi, les formes de la garniture 35 assurent la fonction de détrompeur, c'est-à-dire assurent que les deux demi-coques 4, 5 soient fixées l'une à l'autre selon un sens déterminé.

Le dispositif de signalisation lumineuse 1 comporte encore un dispositif de mise au potentiel visant à éviter la création d'arc électrique. Le dispositif de mise au potentiel comporte deux serre-câbles 30, métalliques, dont l'un est visible sur la figure 5. Les serre-câbles 30 sont respectivement disposés à l'une et l'autre des deux extrémités du dispositif de signalisation lumineuse 1 et sont chacun en contact électrique avec au moins l'une des demi-coques 4, 5. Chaque serre-câble 30 comporte deux mâchoires 31, 32 métalliques destinées à être disposées respectivement de part et d'autre de la ligne 2. Les mâchoires 31, 32 sont fixées l'une à l'autre et connectées électriquement à la coque 3. Selon un mode de réalisation, les mâchoires 31, 32 sont en aluminium, ce qui permet de limiter la masse desdits serre-câbles 30 tout en assurant une conduction satisfaisante de l'électricité. Chacune des mâchoires 31, 32 comporte deux orifices qui sont chacun traversés par une vis 33, 34, ladite vis 33, 34 étant vissée dans un orifice taraudé ménagé dans l'un des deux demi-coques 4, 5.

Par ailleurs, l'agencement précité dans lequel les deux serre-câbles 30 sont positionnés de part et d'autre d'une section de la ligne 2 et sont en contact électrique avec les demi-coques permet de dévier une partie du courant passant dans la ligne 2 au travers du dispositif de signalisation lumineuse 10. Ceci permet de limiter le courant induit dans les bobines d'induction 17 et, par conséquent, de protéger le(s) circuit(s) électrique(s) du dispositif de signalisation lumineuse 1 en cas de fort courant.

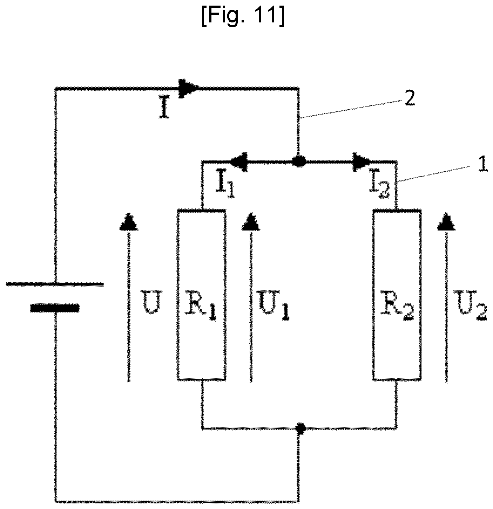

En relation avec la figure 11, on observe les différentes tensions, intensités et résistances dans un système comportant un dispositif de signalisation lumineuse 1 monté sur une ligne 2. Sur cette figure, les indications ont la significations suivantes :

- I : représente l'intensité électrique circulant dans la ligne 2, en amont du dispositif de signalisation lumineuse 1 ;
- $I_1$ : représente l'intensité électrique circulant dans la portion de la ligne 2 équipée du dispositif de signalisation lumineuse 1 ;
- $I_2$ : représente l'intensité électrique qui est déviée de la ligne2 pour passer au travers du dispositif de signalisation lumineuse 1 ;
- $R_1$ : représente la résistance de la portion de la ligne 2 équipée du dispositif de signalisation lumineuse 1 ; et
- R2 représente la résistance équivalente du dispositif de signalisation lumineuse 1.

La résistance R2 correspond à la somme des résistances des éléments traversés par le courant électrique, c'est-à-dire les deux serre-câbles 30 et les deux demi-coques 4, 5.

Ainsi, R2 peut être déterminé avec la formule suivante :

$$ R2 = \sum_{k=0}^{n} \rho_k \frac{L_k}{S_k} \; ; $$

$L_k$ : la longueur de la section considérée en m ;
$S_k$ : la section locale considérée en m$^2$ ; et
$\rho_k$ : la résistivité du matériau en $\Omega$. M.

Le ratio du courant initial passant au travers du dispositif de signalisation lumineuse 1, à savoir I2/I, est donc déterminé à partir de la formule suivante :

$$ \frac{I2}{I} = \frac{R1}{R1 + R2} $$

De manière avantageuse, le dispositif de signalisation lumineuse 1 est dimensionné de sorte que le ratio précité $\frac{R1}{R1+R2}$ soit supérieur à 0,5, de préférence compris entre 0,7 et 0,95 **[MERCI DE COMPLETER],** et par exemple de l'ordre de 0,9 **[MERCI DE COMPLETER].**

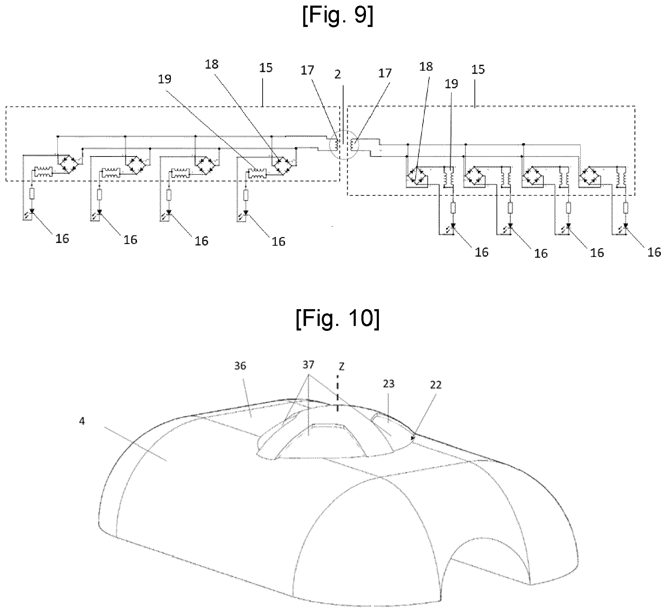

La figure 10 illustre une demi-coque destinée à former un dispositif de signalisation lumineuse 1 selon un deuxième mode de réalisation. Ce mode de réalisation se distingue notamment du premier mode de réalisation décrit en relation avec les figures 1 à 7 par la forme générale de la coque 3, le nombre et le positionnement des ouvertures 22 ainsi que par la forme et les caractéristiques optiques du capot transparent 23. Ce deuxième mode de réalisation vise notamment d'assurer un éclairage à 360° autour d'un axe vertical perpendiculaire à l'axe X.

Dans ce mode de réalisation, la coque 3 ne présente pas strictement une forme de révolution autour de l'axe X. En effet, en coupe dans un plan transversal orthogonal à l'axe longitudinal X, la coque 3 présente une forme oblongue défini par une face supérieure plane et une face inférieure plane qui sont toutes les deux parallèles au plan d'assemblage P et des extrémités arrondies reliant la face supérieure et la face inférieure.

Par ailleurs, chaque coque 3 ne comporte que deux ouvertures 22 qui sont ménagées le long du plan longitudinal médian, respectivement de part et d'autre du plan d'assemblage P. Ainsi, l'une des ouvertures 22 est ménagée sur le dessus de la demi-coque supérieure 4, c'est-à-dire dans la face supérieure 36 de la coque 3, comme représenté sur la figure 10, tandis que l'autre est ménagée sur le dessous de la demi-coque inférieure 5, c'est-à-dire dans la face inférieure de la coque 3.

Le capot transparent 23 est ici divisé en une pluralité de lentilles 37, quatre dans le mode de réalisation représenté, qui sont régulièrement réparties autour d'un axe Z qui est orthogonal au plan d'assemblage P et coupe l'axe X. Une ou plusieurs diodes électroluminescentes, non visibles sur la figure 10, sont orientées pour émettre un flux lumineux sur chacune des lentilles 37. Selon un mode de réalisation, les diodes électroluminescentes sont orientées pour émettre un flux lumineux en direction de l'une des lentilles 37 selon un cône d'émission présentant un axe central parallèle à l'axe Z. Chacune des lentilles 37 est en outre configurée pour focaliser le flux lumineux émis par les diodes électroluminescentes et le diriger au moins en partie parallèlement au plan d'assemblage.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif de signalisation lumineuse (1) apte et destiné à être fixé à une ligne (2) pour le transport d'énergie électrique, ledit dispositif de signalisation lumineuse (1) comprenant :

   - une coque (3) qui s'étend selon un axe longitudinal (X), ladite coque (3) comportant une demi-coque supérieure (4) et une demi-coque inférieure (5) configurées pour être respectivement disposées de part et d'autre de la ligne (2) et s'assembler l'une à l'autre le long d'un plan d'assemblage (P) de sorte à entourer la ligne (2);
   - des organes de fixation (7, 8, 9, 10) agencés pour fixer la demi-coque supérieure (4) et la demi-coque inférieure (5) l'une à l'autre ;
   - la coque (3) comportant au moins deux ouvertures (22) qui sont chacune recouvertes par un capot transparent (23) et arrangées respectivement de part et d'autre d'un plan longitudinal médian ;
   - au moins deux sources lumineuses (16) qui sont logées à l'intérieur de la coque (3) et respectivement disposées en regard de l'une et l'autre des ouvertures (22); et
   - au moins un transformateur de courant (15) qui est logé dans la coque (3) et qui comporte une bobine d'induction (17) qui est apte et destinée à être magnétiquement couplée à la ligne (2); ledit transformateur de courant (15) étant configuré pour transformer un courant circulant dans la ligne (2) en un courant adapté pour alimenter en énergie électrique les sources lumineuses (16).

2. Dispositif de signalisation lumineuse (1) selon la revendication 1, dans laquelle la coque (3) présente une forme de révolution autour de l'axe longitudinal (X), la forme de révolution de la coque (3) correspond à une forme obtenue par rotation autour de l'axe longitudinal (X) d'une courbe ovale, ladite courbe ovale étant allongée selon l'axe longitudinal (X) et symétrique par rapport audit axe longitudinal (X).

3. Dispositif de signalisation lumineuse (1) selon la revendication 1 ou 2, dans lequel la coque (3) comporte au moins quatre ouvertures (22) qui sont chacune recouvertes par un capot transparent (23), deux des quatre ouvertures (22) étant arrangées dans la demi-coque supérieure (4) respectivement de part et d'autre du plan longitudinal médian et les deux autres étant arrangées dans la demi-coque inférieure (5) respectivement de part et d'autre du plan longitudinal médian, le dispositif de signalisation lumineuse (1) comportant au moins quatre sources lumineuses (16) qui sont logées à l'intérieur de la coque (3) et chacune disposées en regard de l'une des ouvertures (22), les sources lumineuses (16) étant chacune positionnées pour émettre un flux lumineux comprenant une pluralité de rayons lumineux dont au moins un est parallèle au plan d'assemblage (P).

4. Dispositif de signalisation lumineuse (1) selon l'une quelconque des revendications 1 à 3, comprenant un ensemble de sources lumineuses comprenant plusieurs sources lumineuses (16), disposé en regard de chacune des ouvertures (22).

5. Dispositif de signalisation lumineuse (1) selon la revendication 4, dans lequel chaque ensemble de sources lumineuses est fixé sur une carte électronique (21) logé dans la coque (3).

6. Dispositif de signalisation lumineuse (1) selon la revendication 5, dans lequel la carte électronique s'étend dans un plan formant avec le plan d'assemblage (P), un angle $\beta \geq 90 - \alpha$ avec $\alpha$ : le demi-angle au sommet d'un cône d'émission des diodes électroluminescentes (16) dudit ensemble, exprimé en degrés.

7. Dispositif de signalisation lumineuse (1) selon la revendication 5 ou 6, dans lequel les sources lumineuses (16) de chaque ensemble sont disposées sous la forme d'une rangée qui est alignée selon une direction parallèle à la direction longitudinale X.

8. Dispositif de signalisation lumineuse (1) selon la revendication 1 ou 2, dans lequel la coque (3) comporte deux ouvertures (22) qui sont respectivement arrangées dans la demi-coque supérieure (4) et dans la demi-coque inférieure (5) et sont chacune recouvertes par un capot transparent (23), les deux ouvertures (22) étant ménagées le long du plan longitudinal médian et respectivement positionnées de part et d'autre du plan d'assemblage (P).

9. Dispositif de signalisation lumineuse (1) selon la revendication 8, dans lequel les capots transparents (23) sont divisés en une pluralité de lentilles (37) qui sont régulièrement réparties autour d'un axe Z qui est orthogonal au plan d'assemblage (P) et coupe l'axe longitudinal (X), le dispositif de signalisation lumineuse (1) comportant une source lumineuse en regard de chacune des lentilles (37), chacune des lentilles (37) étant configurée pour focaliser le flux lumineux émis par la source lumineuse correspondante et le diriger au moins en partie parallèlement au plan d'assemblage (P).

10. Dispositif de signalisation lumineuse (1) selon l'une quelconque des revendications 1 à 9, dans lequel les sources lumineuses (16) sont fixées sur des plaques de support (24), chaque plaque de support (24) étant fixée contre une surface interne de l'une des demi-coque inférieure (5) et demi-coque supérieure (4) par des moyens de fixation (25), chaque plaque de support (24) plaquant l'un des capots transparents (23) contre une zone de bordure (27) de ladite demi-coque inférieure (5) ou supérieure (4) qui est ménagée autour de l'une des ouvertures (22).

11. Dispositif de signalisation lumineuse (1) selon la revendication 10, dans lequel un joint d'étanchéité (28) est pincé entre chacun des capots transparents (23) et la zone de bordure (27).

12. Dispositif de signalisation lumineuse (1) selon l'une quelconque des revendications 1 à 11, dans lequel au moins l'une des sources lumineuses (16) est logée dans la demi-coque supérieure (4) et au moins une autre des sources lumineuses (16) est logée dans la demi-coque inférieure (5), le dispositif de signalisation lumineuse (1) comportant au moins deux transformateurs de courant (15) respectivement logés dans la demi-coque supérieure (4) et la demi-coque inférieure (5), chacun des transformateurs de courant (15) comportant une bobine d'induction (17) qui est apte et destinée à être magnétiquement couplée à la ligne (2) et étant reliée à chaque source lumineuse (16) logée dans la demi-coque supérieure (4) ou inférieure (5) dans laquelle ledit transformateur de courant (15) est logé.

13. Dispositif de signalisation lumineuse (1) selon la revendication 12, dans lequel la bobine d'induction (17) de chacun des transformateurs de courant (15) comporte un noyau ferromagnétique (20) présentant une forme de demi-tube s'étendant le long de l'axe longitudinal (X) et un enroulement de fil qui est enroulé autour du noyau ferromagnétique (20).

14. Dispositif de signalisation lumineuse (1) selon l'une quelconque des revendications 1 à 13, dans lequel la demi-coque supérieure (4) et la demi-coque inférieure (5) sont identiques.

15. Dispositif de signalisation lumineuse (1) selon l'une quelconque des revendications 1 à 14, dans lequel les organes de fixation (7, 8, 9, 10) sont des vis qui passent chacune au travers d'un orifice (11) formé dans l'une des demi-coques supérieure (4) et inférieure (5) et qui sont vissées dans un alésage taraudé (12) formé dans l'autre des demi-coques supérieure (4) et inférieure (5).

16. Dispositif de signalisation lumineuse (1) selon la revendication 15, dans lequel chaque alésage taraudé (12) s'étend selon un axe géométrique qui est symétrique à un axe géométrique de l'un des orifices (11), par rapport à un plan médian longitudinal ou à un plan médian transversal.

17. Dispositif de signalisation lumineuse (1) selon l'une quelconque des revendications 1 à 16, dans lequel chacune des demi-coques supérieure (4) et inférieure (5) est remplie avec une garniture en silicone.

18. Dispositif de signalisation lumineuse (1) selon l'une quelconque des revendications 1 à 17, comportant un dispositif de mise au potentiel comprenant deux serre-câbles (30), métalliques qui sont respectivement disposés à l'une et l'autre des deux extrémités du dispositif de signalisation lumineuse (1) et sont chacun en contact électrique avec au moins l'une des demi-coques supérieure (4) et inférieure (5).

19. Dispositif de signalisation lumineuse (1) selon l'une quelconque des revendications 1 à 18, comprenant deux serre-câbles (30), positionnés de part et d'autre d'une portion de la ligne (2) ; lesdits serre-câbles (30) étant en contact électrique avec les demi-coque supérieure (4) et demi-coque inférieure (5) de sorte à dévier une partie du courant passant dans la ligne (2) au travers du dispositif de signalisation lumineuse (10) ; le dispositif de signalisation lumineuse étant dimensionné de sorte que $\frac{R1}{R1+R2}$ soit supérieur à 0,5, avec :

    - R1 : la résistance de la portion de la ligne (2) équipée du dispositif de signalisation lumineuse (1) ; et
    - R2 : la résistance équivalente du dispositif de signalisation lumineuse (1).

20. Dispositif de signalisation lumineuse selon l'une quelconque des revendications 1 à 19, dans lequel les sources lumineuses (16) sont des diodes électroluminescentes.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

Europäisches
Patentamt

European
Patent Office

Office européen
des brevets

# RAPPORT DE RECHERCHE EUROPEENNE

Numéro de la demande

EP 24 18 3999

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | KR 2018 0038643 A (MUN YUN SU [KR]) 17 avril 2018 (2018-04-17) | 1-8, 10-16, 18,20 | INV. F21V21/08 H02G1/02 |
| Y | * le document en entier * * alinéa [0033]; figure 7 * | 17,18 | H02G7/00 |
| X | JP H08 126177 A (CHUGOKU ELECTRIC POWER; HITACHI CABLE) 17 mai 1996 (1996-05-17) | 1,2,4-8, 12-16,20 | ADD. F21W111/00 F21Y115/10 |
| Y | * le document en entier * | 18 | |
| X | CN 108 320 410 A (2ND RES INST CIVIL AVIATION ADMINISTRATION CHINA) 24 juillet 2018 (2018-07-24) | 1,2,4,8, 10-16, 18,20 | |
| Y | * le document en entier * | 17,18 | |
| X | US 5 361 018 A (MILTON RICHARD M [US]) 1 novembre 1994 (1994-11-01) | 1,2,4, 8-16,18, 20 | |
| Y | * colonne 4, ligne 1 - colonne 5, ligne 30; figures 1-4 * | 17,18 | |
| Y | KR 2011 0133362 A (KIM CHAN SEONG [KR]; PARK EUN JI [KR]; BAE HAN JU [KR]) 12 décembre 2011 (2011-12-12) * alinéas [0022] - [0024]; figures 1-2 * | 17 | |
| A | JP 2009 004293 A (CHUGOKU ELECTRIC POWER) 8 janvier 2009 (2009-01-08) * le document en entier * | 1-20 | |
| A | JP H07 245854 A (HITACHI CABLE; CHUGOKU ELECTRIC POWER) 19 septembre 1995 (1995-09-19) * le document en entier * | 6 | |

DOMAINES TECHNIQUES RECHERCHES (IPC)

H02G
F21W
F21Y
H02J

Le présent rapport a été établi pour toutes les revendications

| Lieu de la recherche | Date d'achèvement de la recherche | Examinateur |
|---|---|---|
| La Haye | 12 novembre 2024 | Thibaut, Arthur |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 18 3999

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-11-2024

| Document brevet cité au rapport de recherche | Date de publication | Membre(s) de la famille de brevet(s) | Date de publication |
|---|---|---|---|
| KR 20180038643 A | 17-04-2018 | AUCUN | |
| JP H08126177 A | 17-05-1996 | JP 2958246 B2<br>JP H08126177 A | 06-10-1999<br>17-05-1996 |
| CN 108320410 A | 24-07-2018 | AUCUN | |
| US 5361018 A | 01-11-1994 | AUCUN | |
| KR 20110133362 A | 12-12-2011 | AUCUN | |
| JP 2009004293 A | 08-01-2009 | JP 5121328 B2<br>JP 2009004293 A | 16-01-2013<br>08-01-2009 |
| JP H07245854 A | 19-09-1995 | JP 2939109 B2<br>JP H07245854 A | 25-08-1999<br>19-09-1995 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2786253
- EP 3579363 A